# EUROPEAN PATENT SPECIFICATION

(11) **EP 4 068 813 B1**
(45) Date of publication and mention of the grant of the patent: **26.11.2025**
(21) Application number: 20892645.1
(22) Date of filing: 09.05.2020
(51) Int. Cl.: H04W 4/14, H04W 24/04, H04L 67/51, H04L 67/55, H04L 67/568, H04L 69/40, H04W 8/06, H04W 8/08, H04W 60/00

(54) **COMMUNICATION METHOD, SYSTEM AND STORAGE MEDIUM**
KOMMUNIKATIONSVERFAHREN, SYSTEM UND SPEICHERMEDIUM
PROCÉDÉ ET SYSTÈME DE COMMUNICATION ET SUPPORT D'ENREGISTREMENT

(30) Priority: 28.11.2019 CN 201911194314
(43) Date of publication of application: 05.10.2022
(73) Proprietor: ZTE Corporation, Shenzhen, Guangdong 518057 (CN)
(72) Inventor: WANG, Wei, Shenzhen, Guangdong 518057 (CN); ZHANG, Lei, Shenzhen, Guangdong 518057 (CN); SHAO, Jun, Shenzhen, Guangdong 518057 (CN)
(74) Representative: Vossius & Partner Patentanwälte Rechtsanwälte mbB
(86) International application number: PCT/CN2020/089451
(87) International publication number: WO 2021/103424

(56) References cited:
- WO-A1-2018/137152
- WO-A1-2018/137152
- WO-A1-2018/199668
- WO-A1-2019/211496
- CN-A- 101 164 352
- CN-A- 109 818 766
- CN-A- 110 392 369
- US-A1- 2019 037 407
- US-A1- 2019 306 695
- HUAWEI ET AL.,: "3GPP TSG-SA2 Meeting #128BIS, S2-188229,", UPDATE REGISTRATION PROCEDURES FOR SMS OVER NAS,, 14 August 2018 (2018-08-14), XP051503037
- ZTE,: "3GPP TSG CT WG4 Meeting #85, C4-184470,", UPDATES TO SERVICE OPERATIONS,, 25 May 2018 (2018-05-25), XP051461199
- CHINA MOBILE,: "SA WG2 Meeting #127, S2-183500,", UPDATE ON SMSONAS PROCEDURES TO SUPPORT MT SMS DOMAIN SELECTION,, 10 April 2018 (2018-04-10), XP051437812
- HUAWEI: "3GPP TSG-CT WG4 Meeting #94, C4-194069,", NF INSTANCE ID IN DEREGISTRATION SERVICE OPERATION,, 27 September 2019 (2019-09-27), XP051786655
- ANONYMOUS: "3rd Generation Partnership Project; Technical Specification Group Services and System Aspects; System Architecture for the 5G System (5GS); Stage 2 (Release 16)", 3GPP STANDARD; TECHNICAL SPECIFICATION; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V16.2.0, 24 September 2019 (2019-09-24), Mobile Competence Centre ; 650, route des Lucioles ; F-06921 Sophia-Antipolis Cedex ; France, pages 1 - 391, XP051784669
- ANONYMOUS: "3rd Generation Partnership Project; Technical Specification Group Services and System Aspects; Procedures for the 5G System (5GS); Stage 2 (Release 16)", 3GPP STANDARD; TECHNICAL SPECIFICATION; 3GPP TS 23.502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V16.2.0, 30 September 2019 (2019-09-30), Mobile Competence Centre ; 650, route des Lucioles ; F-06921 Sophia-Antipolis Cedex ; France, pages 1 - 525, XP051784671
- "3rd Generation Partnership Project; Technical Specification Group Services and System Aspects; Telecommunication management; Subscriber and equipment trace; Trace control and configuration management (Release 15)", 3GPP STANDARD; TECHNICAL SPECIFICATION; 3GPP TS 32.422, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V15.2.0, 12 June 2019 (2019-06-12), Mobile Competence Centre ; 650, route des Lucioles ; F-06921 Sophia-Antipolis Cedex ; France, pages 1 - 189, XP051754020
- "3rd Generation Partnership Project; Technical Specification Group Core Network and Terminals; 5G System; Restoration Procedures (Release 16)", 3GPP STANDARD; TECHNICAL SPECIFICATION; 3GPP TS 23.527, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. V16.1.0, 19 September 2019 (2019-09-19), Mobile Competence Centre ; 650, route des Lucioles ; F-06921 Sophia-Antipolis Cedex ; France, pages 1 - 19, XP051784569

## Description

### TECHNICAL FIELD

The present application relates to the field of communications, and in particular, relates to a communication connection method and device, and a storage medium.

### BACKGROUND

The 3rd Generation Partnership Project (3GPP) protocol provides a complete specification for the implementation of the functions and basic traffic flows of 5G Core (5GC) network elements. However, in the actual use process of an operator, since a 5G terminal does not register periodically, the registration flow is triggered only when a subscriber starts up or moves into a short message service function (SMSF).

In the actual communication process, short message delivery failure may occur and include the following cases. Firstly, due to network, routing or other abnormalities, when a 5G subscriber starts up or enters, the SMSF fails to receive a registration message, at this point, when the subscriber sends a short message or receives a short message, subscriber context information cannot be found in an SMSF cache, and the short message cannot be delivered, resulting in short message delivery failure, thus causing subscriber complaints. Secondly, in a case where one SMSF network element fails and goes down, the 5G subscriber cannot find the subscriber context information either, and the short message cannot be delivered, resulting in short message delivery failure, thus greatly reducing the use experience of the subscriber.

3GPP TS 23.502 v16.2.0, WO 2018/137152 A1 and CN 109 818 766 A are documents of the related art.

### SUMMARY

Embodiments of the present application provide a communication connection method, a device, and a storage medium, ensuring the normal delivery of a short message and further effectively improving the use experience of a subscriber.

The invention is specified by the independent claims. Preferred embodiments are defined in the dependent claims. In the following description, although numerous features may be designated as optional, it is nevertheless acknowledged that all features comprised in the independent claims are not to be read as optional.

### BRIEF DESCRIPTION OF DRAWINGS

FIG. 1 is a flowchart of a communication connection method according to an embodiment of the present application;
FIG. 2 is a flowchart of another communication connection method according to an embodiment that is not claimed;
FIG. 3 is a flowchart of another communication connection method according to an embodiment that is not claimed;
FIG. 4 is a flowchart of another communication connection method according to an embodiment that is not claimed;
FIG. 5 is a flowchart of short message sending abnormality protection for a 5G subscriber according to an embodiment of the present application;
FIG. 6 is a flowchart of short message receiving abnormality protection for a 5G subscriber according to an embodiment of the present application;
FIG. 7 is a flowchart of a subscriber context information cache logic according to an embodiment of the present application;
FIG. 8 is a flowchart of SMSF network element normal operation according to an embodiment that is not claimed;
FIG. 9 is a flowchart of SMSF network element fault tolerance according to an embodiment is not claimed;
FIG. 10 is a flowchart of a SMSF network element disaster recovery according to an embodiment that is not claimed;
FIG. 11 is a structural block diagram of a communication connection system according to an embodiment of the present application;
FIG. 12 is a structural block diagram of another communication connection system according to an embodiment of the present application;
FIG. 13 is a structural block diagram of a communication connection apparatus according to an embodiment of the present application;
FIG. 14 is a structural block diagram of another communication connection apparatus according to an embodiment of the present application;
FIG. 15 is a structural block diagram of another communication connection apparatus according to an embodiment of the present application;
FIG. 16 is a structural block diagram of another communication connection apparatus according to an embodiment of the present application; and
FIG. 17 is a structural schematic diagram of a device according to an embodiment of the present application.

### DETAILED DESCRIPTION

Embodiments of the present application are described hereinafter in conjunction with drawings. If not in collision, the embodiments described herein and the features thereof can be combined with each other.

SMSF is a network-attached server (NAS) short message network element which conforms to the 3GPP 29.540 protocol in a 5G core network. The SMSF interacts with an access and mobility management function (AMF) via an N20 interface, interacts with unified data management (UDM) via an N21 interface, and interfaces with a short message service center (SMSC)/IP short message gateway (IPSMGW) via a mobile application part (MAP) interface, to provide NAS short message services for 5G terminal subscribers.

SMSC is configured to implement the storage, forwarding and retry functions of a terminal short message.

The 5G SMSF network element is configured to implement the registration/de-registration of a 5G subscriber terminal and the forwarding of an originating call short message/terminating call short message.

The 5G AMF device is configured to implement the mobility and access management functions of a 5G terminal.

The UDM device is configured to implement the management and storage functions of subscription data and authentication data of a 5G terminal subscriber.

The network repository function (NRF) is configured to register and discover services among multiple 5GC network elements. Network elements providing services register service capabilities on an NRF, and network elements using services discover these serving network elements from the NRF and then perform subsequent traffic flow interactions. The SMSF, the AMF and the UDM discover services of each other through the NRF and can subscribe to service change notifications of each other.

In the 3GPP protocol, Table 1 is a comparison table between four traffic scenarios of a 5G NAS short message and subscriber context status data provided by the present application.

**Table 1 Comparison table between four traffic scenarios of a 5G NAS short message and subscriber context status data**

| Traffic scenario | Term | Traffic flow | SMSF subscriber context status data cache |
|---|---|---|---|
| A 5G subscriber starts up or moves into an SMSF | Registrati on | UE->AMF->SMSF->UD M | 1. Caching and recording the subscriber and an AMF where the subscriber |
| | | | 2. Acquiring subscription data of the subscriber from UDM and performing caching |
| A 5G subscriber shuts down or moves out of an SMSF | De-registratio n | UE->AMF->SMSF->UD M | Deleting a corresponding subscriber and context cache thereof |
| A 5G subscriber sends a short message | Call originatio n | UE->AMF->SMSF->SMS C | Determining whether the subscriber is allowed to originate a call according to subscription data authentication of the subscriber in the cache |
| A 5G subscriber receives a short message | Call terminatio n | SMSC->SMSF->AMF->U E | 1. Querying the subscription data authentication of the subscriber in the cache to determine whether the subscriber is allowed to terminate a call |
| | | | 2. Querying the AMF where the subscriber is located in the cache, and delivering a message to a corresponding AMF |

As shown in Table 1, the 3GPP protocol provides a complete specification for the implementation of the functions and basic traffic flows of 5GC network elements. However, many abnormality scenarios are encountered during the actual commercial use process of the operator. The SMSF can acquire the subscriber context only when the flow is registered, and the subscriber context is required for the call origination and the call termination. The 5G terminal does not periodically register, and a registration flow can be triggered only when a subscriber starts up, switches a network or moves into an SMSF, which causes the situations described below.

Firstly, due to network, routing or other abnormalities, when a 5G subscriber starts up or moves in the SMSF, the SMSF fails to receive a registration message. At this point, the subscriber sends or receives short messages, the subscriber context cannot be found in the SMSF cache, the messages fail to be delivered, resulting in subscriber complaints.

Secondly, due to network, routing or other abnormalities, when a 5G subscriber shuts down or moves out from the SMSF, the SMSF fails to receive the de-registration message of the subscriber, and the subscriber context in the cache cannot be cleaned up in time and becomes dirty data, which will cause hidden dangers to system memory over time.

Thirdly, when one SMSF network element goes down, the problems of how to make 5G subscribers not perceive the failure and how to continue to provide NAS short message services need to be solved. Meanwhile, after the SMSF network element goes down and then recovers, how to solve the subscriber context data of the above two problems is an urgent problem to be solved. The 3GPP protocol has no definition for the above abnormality scenarios and has no unified solution thereto, which requires manufacturers to design by themselves. When manufacturers design, the design where existing 3GPP protocol interfaces instead of privatized interfaces are used is more likely to become a solution commonly used in the industry.

The present application provides a communication connection method. In the case of network, routing, disaster tolerance or other abnormalities, when a 5G subscriber starts up or moves in the SMSF, though the SMSF fails to receive a registration message, the normal delivery of messages can still be ensured, and the normal sending and receiving of 5G short messages of subscribers can still be ensured, thereby improving the use experience of subscribers.

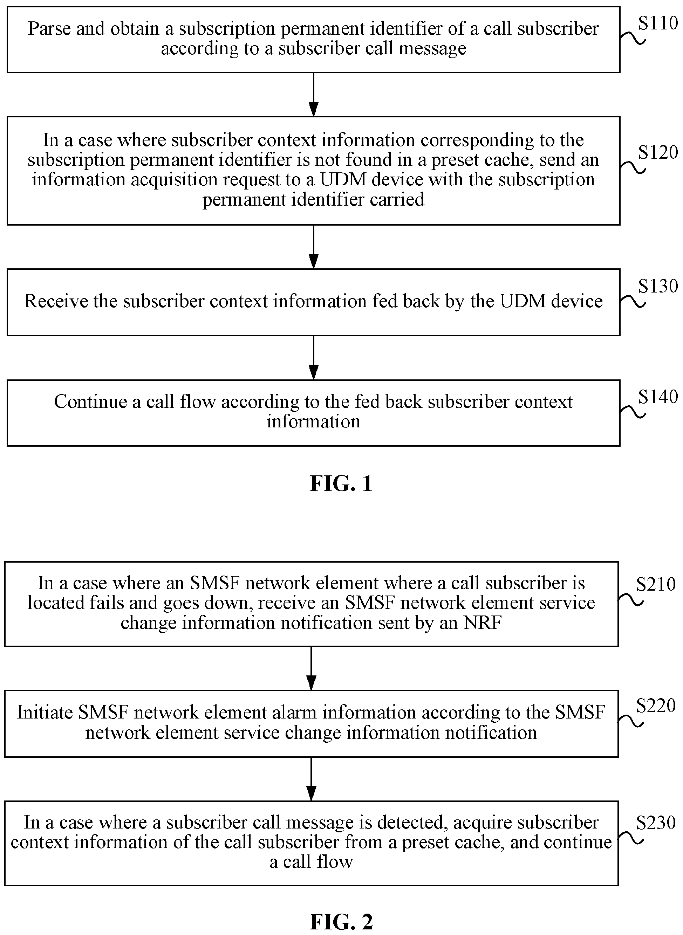

In an embodiment, FIG. 1 is a flowchart of a communication connection method according to an embodiment of the present application. This embodiment is applied to the case of the abnormality protection of an SMSF network element. This embodiment may be performed by a device, which, for example, may be an SMSF network element.

As shown in FIG. 1, the method in this embodiment includes S110 to S140.

In S110, an SUPI of a call subscriber is obtained by parsing a subscriber call message.

In an embodiment, the subscriber call message refers to a message sent when a subscriber originates a call. In an embodiment, the subscriber call message may include a calling subscriber originating call message and a called subscriber terminating call message. The calling subscriber originating call message refers to a message sent by a calling subscriber, and the called subscriber terminating call message refers to a message received by the called subscriber. That is, the subscriber call message corresponds to a call subscriber. In an embodiment, the call subscriber is a subscriber supporting a 5G terminal, that is, the terminal device used by the call subscriber does not periodically register, and the registration flow is triggered only when the call subscriber starts up or moves into an SMSF.

In an embodiment, in a case where the subscriber call message is a calling subscriber originating call message, the call subscriber is a calling subscriber. In a case where the subscriber call message is a calling subscriber originating call message, the subscriber call message may be to send a short message, and accordingly, the call subscriber is a calling subscriber. In an embodiment, in a case where the subscriber call message is a called subscriber terminating call message, the call subscriber is a called subscriber. In a case where the subscriber call message is a called subscriber terminating call message, the subscriber call message may be to receive a short message, and accordingly, the call subscriber is a called subscriber.

In an embodiment, when the SMSF receives the subscriber call message, the SMSF parses the subscriber call message and obtains a subscription permanent identifier (SUPI) of the call subscriber. Each call subscriber corresponds to a unique SUPI.

In S120, in a case where subscriber context information corresponding to the SUPI is not found in a preset cache, an information acquisition request is sent to a UDM device with the SUPI carried. In an embodiment, the SMSF queries the subscriber context information of the call subscriber in a preset cache, and in a case where the subscriber context information of the call subscriber is not found, the SMSF carries the SUPI of the call subscriber and sends an information acquisition request to the UDM to acquire corresponding related information.

In S130, the subscriber context information fed back by the UDM device is received.

In an embodiment, the subscriber context information includes information about the call subscriber, information about an AMF device where the call subscriber is located, and information about subscription data. In an embodiment, after the SMSF sends the information acquisition request to the UDM, the UDM feeds back the corresponding subscriber context information to the SMSF. In an embodiment, when the SMSF acquires the call subscriber and the AMF device where the call subscriber is located through the information acquisition request, the SMSF acquires subscription data of the call subscriber and subscribes to a subscription data change notification of the call subscriber. The subscriber context information is cached after the SMSF completes the acquisition of the call subscriber, the AMF device where the call subscriber is located and subscription data and the subscription of the subscription data change notification.

In S140, a corresponding call flow continues according to the fed back subscriber context information.

In an embodiment, after the SMSF acquires the subscriber context information, an originating call authority or a terminating call authority in the subscription data in the subscriber context information is determined. If the originating call authority authentication passes, the original originating call flow continues, and the subscriber call message is forwarded to the SMSC; and if the originating call authority authentication does not pass, the originating call authentication failure response is returned to AMF. If the terminating call authority authentication passes, the original terminating call flow continues, and the subscriber call message is forwarded to the corresponding AMF; and if the terminating call authority authentication does not pass, a SMSC terminating call authentication failure response is returned to the AMF.

In the related art, due to network, routing or other abnormalities, when the call subscriber starts up or moves in the SMSF, in the SMSF fails to receive the registration message, thus causing the information sending failure or the information receiving failure. In an embodiment, when a call subscriber sends or receives a short message, if the SMSF does not find the subscriber context information in the preset cache of the SMSF itself, the SMSF acquires the corresponding subscriber context information from the UDM and caches the subscriber context information, so that the original originating call flow or terminating call flow can continue, which avoids direct failure, thereby effectively improving the use experience of the subscriber.

In an embodiment, in a case where a call subscriber sets mobile original (MO) or mobile terminated (MT) abnormality protection, a limited cache validity period is set for the subscriber context information. In the related art, the subscriber context information of the call subscriber is set to be permanently saved by default, and due to network, routing or other abnormalities, when the call subscriber shuts down or moves out of the SMSF, the SMSF fails to receive the de-registration message of the call subscriber, and the subscriber context information in the preset cache of the SMSF cannot be cleaned up in time and becomes dirty data, which causes certain hidden dangers to the system memory. In an embodiment, in a case where the call subscriber sets MO or MT abnormality protection, that is, when a call subscriber sends or receives a short message, in a case where the SMSF does not find the subscriber context information in the preset cache of the SMSF itself, acquires the subscriber context information from the UDM and caches the subscriber context information, a limited cache validity period may be set for the subscriber context information to avoid dirty data in the preset cache of the SMSF network element.

In an embodiment, when a call subscriber registers, sends an originating call message or receives a terminating call message, a system automatically extends the cache validity period of the call subscriber so that the cache data of each call subscriber is dispersed, thereby avoiding the access impact problem caused by collective expiration.

FIG. 2 is a flowchart of another communication connection method according to an embodiment of the present application. This embodiment is applicable to the scenario of SMSF network element fault tolerance. This embodiment is executed by a disaster backup SMSF network element. In an embodiment, the disaster backup SMSF network element is another SMSF network element in the system other than the SMSF network element that fails and goes down. As shown in FIG. 2, this embodiment includes S210 to S230.

In S210, in a case where an SMSF network element where a call subscriber is located fails and goes down, an SMSF network element service change information notification sent by an NRF is received.

In an embodiment, the SMSF network element service change information notification refers to the generated relevant notification of information change in a case where one SMSF network element in the system fails or recovers. In a case where the SMSF network element where the call subscriber is located fails and goes down, the heartbeat detection between the NRF and the SMSF network element that fails and goes down fails, and in order to ensure normal operation of a call flow, the NRF sends an SMSF network element service change information notification to all the SMSF network elements so as to enable other SMSF network elements that normally work to obtain relevant information of the SMSF network element that fails and goes down.

In S220, SMSF network element alarm information is initiated according to the SMSF network element service change information notification.

In an embodiment, after the other SMSF network elements that normally work receive the SMSF network element service change information notification, the SMSF network element alarm information is initiated to notify operation and maintenance personnel to perform fault searching and maintenance on the SMSF network element that fails and goes down.

In S230, in a case where the subscriber call message is detected, subscriber context information of the call subscriber is acquired from a preset cache or a UDM device, and a corresponding call flow continues.

In an embodiment, service corresponding to the subscriber call message is originally processed by the SMSF network element that fails and goes down. When a call subscriber that is originally registered on the SMSF network element that fails and goes down makes a call, the AMF device comprehensively determines a locality and a capacity of the disaster backup SMSF network element and shunts the subscriber call message. The disaster backup SMSF network element may acquire subscriber context information of the call subscriber from a preset cache so as to continue a corresponding call flow, ensuring a normal call of the subscriber and improving use experience of the subscriber.

In an embodiment, inside the SMSF network element, the subscriber context information is cached using a cache unit of the SMSF network element in a cluster and anti-affinity copy manner so as to ensure that the subscriber context information inside the SMSF network element is a high-availability cache. In an embodiment, in a case where the subscriber context information cannot be cached in the storage space of one cluster cannot, multiple clusters may be used to cache the subscriber context information.

In an embodiment, between SMSF network elements, the subscriber context information is cached in an inter-cluster synchronization manner to ensure that the subscriber context information between the SMSF network elements is a high-availability cache. In an embodiment, in a case where one cluster fails, the subscriber context information may be cached in a manner of synchronization of multiple clusters.

In an embodiment, in a case where the call subscriber registers, sends an originating call message or receives a terminating call message, the method further includes: a cache validity period of the subscriber context information corresponding to the call subscriber is automatically extended.

In an embodiment, in a case where the subscriber context information corresponding to the call subscriber is not found in the preset cache, the method further includes: an information acquisition request is sent to a UDM device, and the subscriber context information fed back by the UDM device is received.

In an embodiment, all the AMFs and all the SMSF network elements subscribe to all the SMSF network element services on the NRF. In a case where one of the SMSF network elements fails and goes down, the heartbeat detection between the NRF and the one SMSF network element fails, the NRF sends an SMSF network element service change information notification to all the AMFs and all other SMSF network elements that normally work, and after the other network elements that normally work receive the change information notification, an SMSF network element alarm is sent to notify operation and maintenance personnel.

At this occasion, when the calling subscriber that is originally registered on the SMSF network element that fails and goes down sends a short message, the AMF knows that the SMSF network element where the calling subscriber is originally located has gone down and cannot deliver the short message, the AMF notifies SMSF network elements that normally work according to the NRF and comprehensively determines localities and capacities of these SMSF network elements that normally work (that is, the disaster backup SMSF network elements) to shunt the originating call message of the calling subscriber. Since the subscriber context information is cached using a cluster and anti-affinity copy manner, high availability inside the network element is ensured, and high availability of inter-network element disaster tolerance is ensured using inter-cluster synchronization. These disaster backup SMSF network elements may acquire the subscriber context information from the cache; and if the subscriber context information is not acquired due to abnormality, the subscriber context information is acquired from the UDM device and cached to continue to provide NAS short message services for the subscriber. In an embodiment, if the call subscriber subsequently re-registers or originates a call message, the SMSF network element extends the cache validity period of the subscriber context.

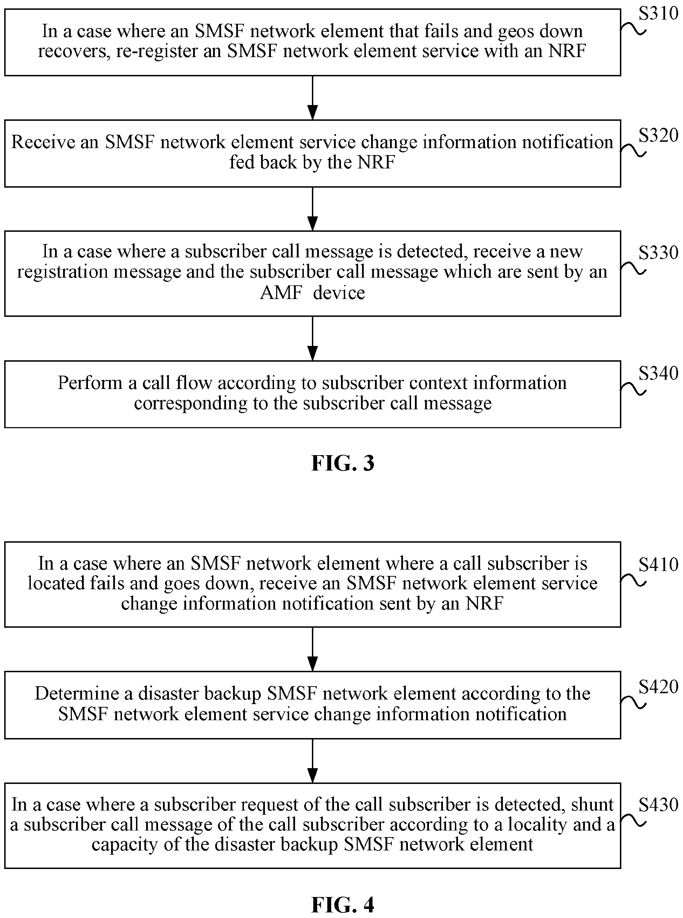

In an embodiment, FIG. 3 is a flowchart of another communication connection method according to an embodiment of the present application. This embodiment is applicable to a case where an SMSF network element that fails and goes down recovers. This embodiment is executed by an SMSF network element that fails, goes down and then recovers. As shown in FIG. 3, this embodiment includes S310 to S340.

In S310, in a case where an SMSF network element that fails and goes down recovers, an SMSF network element service is re-registered with an NRF.

In S320, an SMSF network element service change information notification fed back by the NRF is received.

In S330, in a case where a subscriber call message is detected, a new registration message and the subscriber call message which are sent by an AMF device are received.

In S340, a corresponding call flow is performed according to subscriber context information corresponding to the subscriber call message.

In an embodiment, subscriber context information corresponding to the subscriber call message is acquired from a preset cache or a UDM device.

In an embodiment, inside the SMSF network element, subscriber context information is cached using the cache unit of the SMSF network element in a cluster and anti-affinity copy manner so as to ensure that the subscriber context information in the SMSF network element is a high-availability cache.

In an embodiment, between SMSF network elements, the subscriber context information is cached in an inter-cluster synchronization manner to ensure that the subscriber context information between the SMSF network elements is a high-availability cache.

In an embodiment, all the AMFs and SMSFs subscribe to all the SMSF network element services on the NRF, and after the SMSF network element that fails, goes down and then recovers re-registers its services on the NRF. The NRF sends an SMSF network element service change information notification to all the AMFs and SMSFs. After the SMSF network element that originally normally work receives the notification, the SMSF network element sends SMSF network element recovery to notify operation and maintenance personnel.

At this occasion, when call subscribers that are originally registered on the recovered SMSF network element send short messages, the AMF knows that the SMSF network element in the nearest region where the call subscribers are located recovers, and the AMF begins to deliver new registration messages and originating call messages of these subscribers to the recovered SMSF network element. Since the cache validity period is set for the cache of the subscriber context information, the disaster backup SMSF network element will not receive the registration message and the originating call message of the subscriber from the AMF, and after the cache validity period expires, the subscriber context information is automatically deleted from the cache of the disaster backup SMSF network element, thereby avoiding the cache dirty data.

In an embodiment, FIG. 4 is a flowchart of another communication connection method according to an embodiment of the present application. This embodiment is applicable to a case where an SMSF network element where a call subscriber is located fails and goes down. This embodiment is executed by an AMF device. As shown in FIG. 4, this embodiment includes S410 to S430.

In S410, in a case where an SMSF network element where a call subscriber is located fails and goes down, an SMSF network element service change information notification sent by an NRF is received.

In S420, a corresponding disaster backup SMSF network element is determined according to the SMSF network element service change information notification.

In an embodiment, the disaster backup SMSF network element is another SMSF network element other than the SMSF network element that fails and goes down.

In S430, in a case where a call request of the call subscriber is detected, a subscriber call message of the call subscriber is shunted according to a locality and a capacity of the disaster backup SMSF network element.

In an embodiment, in a case where the SMSF network element where the call subscriber is located fails and goes down, the NRF initiates an SMSF network element service change information notification to all the AMF devices, and when the call subscriber that is originally registered on the SMSF network element that fails and goes down originates a call, the AMF devices knows that the SMSF network element where the call subscriber is originally located cannot deliver messages. The AMF devices notify the disaster backup SMSF network element according to the NRF and comprehensively analyze a locality and a capacity of the disaster backup SMSF network element to shunt the subscriber call message, and the disaster backup SMSF network element processes the subscriber call message, thereby ensuring the normal call flow and improving the use experience of the subscriber.

In an embodiment, after the subscriber call message of the call subscriber is shunted according to the locality and capacity of the disaster backup SMSF network element, the method further includes: in a case where the subscriber call message is detected, subscriber context information of the call subscriber is acquired from a preset cache or UDM, and a corresponding call flow continues.

In an embodiment, in the case where the SMSF network element that fails and goes down recovers and no SMSF network element fails and goes down, the communication connection method further includes: a new registration message and the subscriber call message of the call subscriber are sent to the recovered SMSF network element.

In an embodiment, in a case where the SMSF network element where the call subscriber is originally located recovers, the AMF device begins to deliver the new registration message and the subscriber call message of the call subscriber to the recovered SMSF network element. The cache validity period of the subscriber context information is set in another disaster backup SMSF network element, the disaster backup SMSF network element will not receive the new registration message and the subscriber call message of the call subscriber from the AMF device, and after the cache validity period expires, the subscriber context information is automatically deleted from the preset cache of the disaster backup SMSF network element, thereby avoiding the cache dirty data. In an embodiment, in the case where a call subscriber originates a call, the communication connection method further includes: acquiring a locality and a capacity of each SMSF network element; determining a to-be-connected SMSF network element according to the locality and the capacity; and distributing and registering the call subscriber to the determined SMSF network element.

In an embodiment, in a case where multiple SMSF network elements work normally, their respective SMSF network element services are registered on the NRF, the SMSF network element services have the same priority by default, and localities and capacities are set for these SMSF network elements respectively. The AMF may discover all the SMSF network elements and service registration parameters thereof from the NRF. When a call subscriber (for example, a 5G subscriber) starts up, according to the SMSFs corresponding to a region the nearest to the calling subscriber (for saving network resource overhead), the AMF distributes call subscribers in the region and registers these call subscribers on the corresponding SMSFs among the SMSF network elements with the highest priority according to the capacity requirements. In an embodiment, when the SMSF network elements are initialized, the priorities of the SMSF network elements are the same by default, and the capabilities of the SMSF network elements are the same by default. With the continuous use of the SMSF network elements, the performance of each SMSF network element changes, and accordingly, the capabilities of the SMSF network elements also change. The capabilities and priorities of the SMSF network elements may be manually configured.

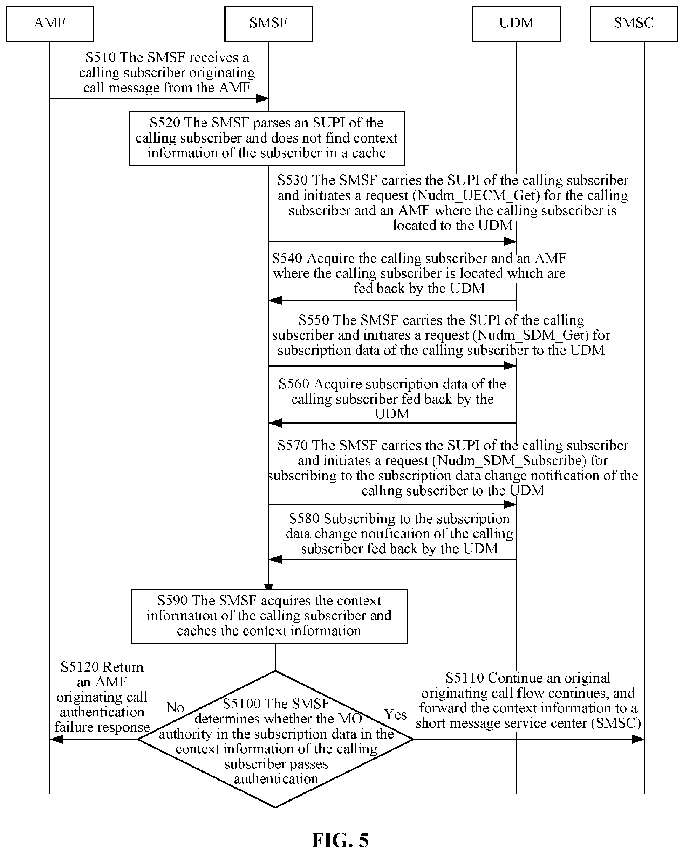

In an embodiment, FIG. 5 is a flowchart of short message sending abnormality protection for a 5G subscriber according to an embodiment of the present application. As shown in FIG. 5, this embodiment includes S510 to S5120.

In S510, an SMSF receives a calling subscriber originating call message (that is, Nsmsf_SMService_UplinkSMS) from an AMF.

In S520, the SMSF parses an SUPI of the calling subscriber and does not find context information of the subscriber in a cache.

In S530, the SMSF carries the SUPI of the calling subscriber and initiates a Nudm_UECM_Get request to the UDM.

In S540, the calling subscriber and an AMF where the calling subscriber is located which are fed back by the UDM are acquired.

In S550, the SMSF carries the SUPI of the calling subscriber and initiates a Nudm_SDM_Get request to the UDM.

In S560, subscription data of the calling subscriber fed back by the UDM is acquired.

In S570, the SMSF carries the SUPI of the calling subscriber and initiates a Nudm_SDM_Subscribe request to the UDM.

In S580, a subscription data change notification of the calling subscriber fed back by the UDM is subscribed to.

In S590, the SMSF acquires the context information of the calling subscriber and caches the context information.

In S5100, the SMSF determines whether the MO authority in the subscription data in the context information of the calling subscriber passes authentication, and if the MO authority in the subscription data in the context information of the calling subscriber passes authentication, S5110 is performed; if the MO authority in the subscription data in the context information of the calling subscriber does not pass authentication, S5120 is performed.

In S5110, an original originating call flow continues, and the context information is forwarded to a short message service center (SMSC).

In S5120, an AMF originating call authentication failure response is returned.

In an embodiment, when the 5G subscriber sends a short message, if the SMSF does not find the subscriber context information of the calling subscriber in the preset cache of the SMSF, the SMSF acquires the subscriber context information from the UDM and caches the subscriber context information, and the original originating call flow continues, thus improving the use experience of the subscriber.

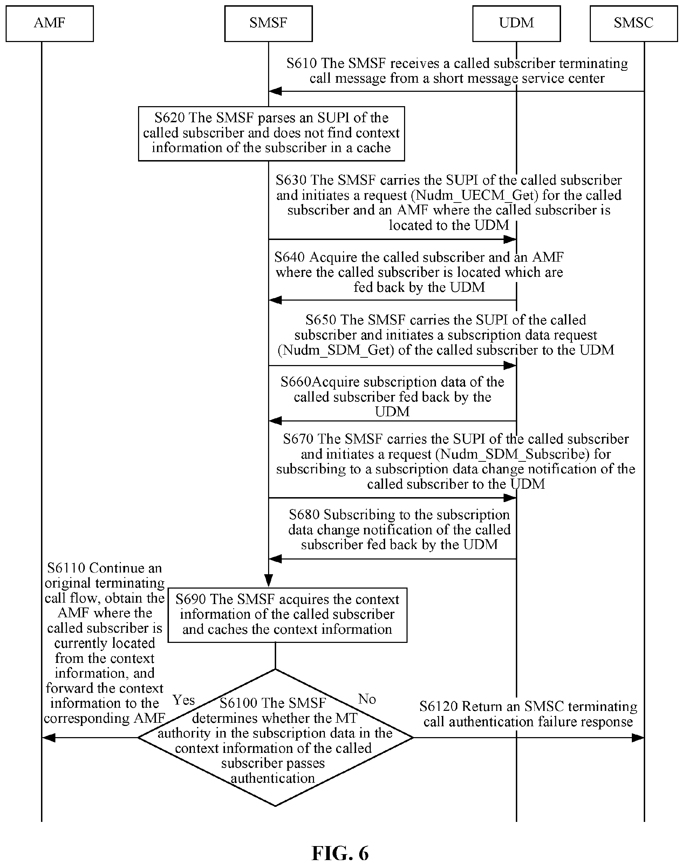

In an embodiment, FIG. 6 is a flowchart of short message receiving abnormality protection for a 5G subscriber according to an embodiment of the present application. As shown in FIG. 6, this embodiment includes S610 to S6120.

In S610, an SMSF receives a called subscriber terminating call message (that is, MT_Forward) from a short message service center.

In S620, the SMSF parses an SUPI of the called subscriber and does not find context information of the subscriber in a cache.

In S630, the SMSF carries the SUPI of the called subscriber and initiates a Nudm_UECM_Get request to the UDM.

In S640, the called subscriber and an AMF where the called subscriber is located which are fed back by the UDM are acquired.

In S650, the SMSF carries the SUPI of the called subscriber and initiates a Nudm_SDM_Get request to the UDM.

In S660, subscription data of the called subscriber fed back by the UDM is acquired.

In S670, the SMSF carries the SUPI of the called subscriber and initiates a Nudm_SDM_Subscribe request to the UDM.

In S680, a subscription data change notification of the called subscriber fed back by the UDM is subscribed to.

In S690, the SMSF acquires the context information of the called subscriber and caches the context information.

In S6100, the SMSF determines whether the MT authority in the subscription data in the context information of the called subscriber passes authentication, and if the MT authority in the subscription data in the context information of the called subscriber passes authentication, S6110 is performed; if the MT authority in the subscription data in the context information of the called subscriber does not pass authentication, S6120 is performed.

In S6110, an original terminating call flow continues, the AMF where the called subscriber is currently located is obtained from the context information, and the context information is forwarded to the corresponding AMF.

In S6120, an SMSC terminating call authentication failure response is returned.

In an embodiment, when the 5G subscriber receives a short message, if the SMSF does not find the subscriber context information of the called subscriber in the preset cache of the SMSF, the SMSF acquires the subscriber context information from the UDM and caches the subscriber context information, and the original terminating call flow continues, thereby improving the use experience of the subscriber.

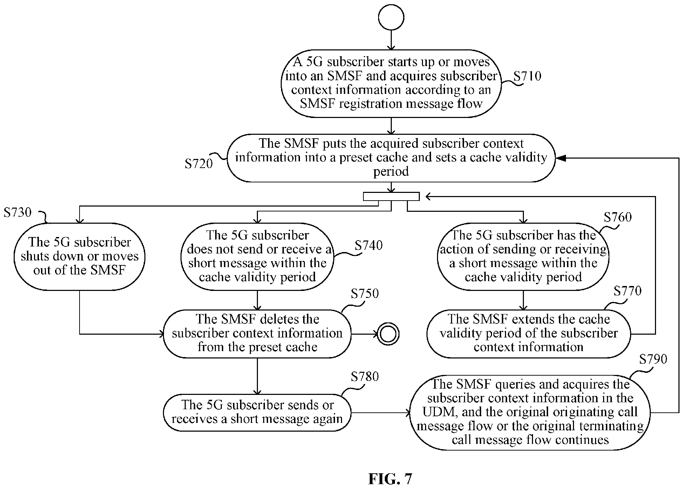

In an embodiment, FIG. 7 is a flowchart of a subscriber context information cache logic according to an embodiment of the present application. As shown in FIG. 7, this embodiment includes S710 to S790.

In S710, a 5G subscriber starts up or moves into an SMSF and acquires subscriber context information according to an SMSF registration message flow.

In S720, the SMSF puts the acquired subscriber context information into a preset cache and sets a cache validity period.

In an embodiment, the cache validity period may be the sum of the registration message time and the preset system-level validity duration.

In S730, the 5G subscriber shuts down or moves out of the SMSF.

In S740, the 5G subscriber does not send or receive a short message within the cache validity period.

In S750, the SMSF deletes the subscriber context information from the preset cache.

In an embodiment, in the scenario where the 5G subscriber shuts down or moves out of the SMSF, or in the scenario where the 5G subscriber does not send or receive a short message within the cache validity period, the SMSF deletes the subscriber context information from the cache, and a complete flow is completed.

In S760, the 5G subscriber has the action of sending or receiving a short message within the cache validity period.

In S770, the SMSF extends the cache validity period of the subscriber context information.

In an embodiment, the cache validity period may be the sum of the originating call or terminating call message time and the preset system-level validity duration.

In S780, the 5G subscriber sends or receives a short message again.

In an embodiment, after S750, that is, after the SMSF deletes the subscriber context from the cache, S790 is performed if the 5G subscriber sends or receives a short message again.

In S790, the SMSF queries and acquires the subscriber context information in the UDM, and the original originating call message flow or the original terminating call message flow continues.

In an embodiment, S730 and S740 are two scenarios, and when the scenario of S730 or S740 is satisfied, the SMSF may delete the subscriber context information from the preset cache to avoid the storage of dirty data. In the scenario where S760 is satisfied, S770 is performed to extend the cache validity period of the 5G subscriber to avoid the phenomenon that the corresponding subscriber context information cannot be found.

In an embodiment, for the flow of sending a short message, reference is made to the description of FIG. 5 in the embodiment described above, for the flow of receiving a short message, reference is made to the description of FIG. 6 in the embodiment described above, and details will not be repeated here. Then the process returns to S720, that is, the SMSF puts the acquired subscriber context information into a cache, sets a cache validity period which is the sum of the originating call or terminating call message time and the preset system-level validity duration, and queries the corresponding subscriber context information.

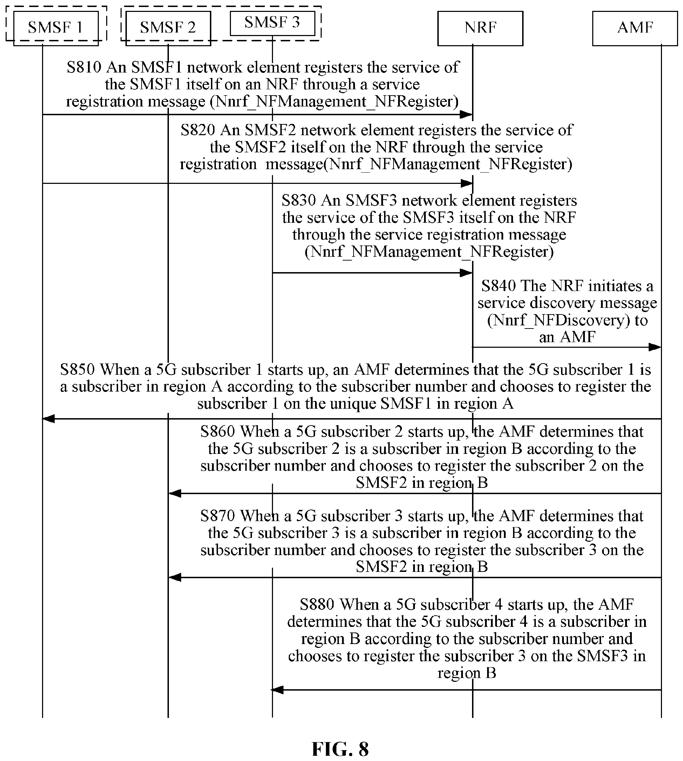

In an embodiment, FIG. 8 is a flowchart of SMSF network element normal operation according to an embodiment of the present application. As shown in FIG. 8, this embodiment includes S810 to S880.

In S810, an SMSF1 network element registers the service of the SMSF 1 itself on an NRF through an Nnrf_NFManagement_NFRegister message.

In an embodiment, the SMSF1 is constructed in region A, and after the network element is started, the network element registers its service on the NRF through the Nnrf_NFManagement_NFRegister message, where the Nnrf_NFManagement_NFRegister message carries the locality indicating its service in region A, the priority being equal to 1, and the capacity being equal to 1.

In S820, an SMSF2 network element registers the service of the SMSF2 itself on the NRF through the Nnrf_NFManagement_NFRegister message.

In an embodiment, the SMSF2 is constructed in region B, and after the network element is started, the network element registers its service on the NRF through the Nnrf_NFManagement_NFRegister message, where the Nnrf_NFManagement_NFRegister message carries the locality indicating its service in region B, the priority being equal to 1, and the capacity being equal to 2.

In S830, an SMSF3 network element registers the service of the SMSF3 itself on the NRF through the Nnrf_NFManagement_NFRegister message.

In an embodiment, the SMSF3 is constructed in region B, and after the network element is started, the network element registers its service on the NRF through the Nnrf_NFManagement_NFRegister message, where the the Nnrf_NFManagement_NFRegister message carries the locality indicating its service in region B, the priority being equal to 1, and the capacity being equal to 1.

In S840, the NRF initiates an Nnrf_NFDiscovery message to an AMF.

In an embodiment, the NRF initiates an Nnrf_NFDiscovery message to the AMF, discovers three SMSFs, and knows that the SMSF1 provides services in region A and that SMSF2 and SMSF3 provide services in region B according to service registration parameters of the SMSFs. A ratio of the capacity of SMSF2 to the capacity of SMSF3 is equal to 2:1.

In S850, when a 5G subscriber 1 starts up, an AMF determines that the 5G subscriber 1 is a subscriber in region A according to the subscriber number and chooses to register the subscriber 1 on the unique SMSF1 in region A.

In S860, when a 5G subscriber 2 starts up, the AMF determines that the 5G subscriber 2 is a subscriber in region B according to the subscriber number and chooses to register the subscriber 2 on the SMSF2 in region B.

In an embodiment, when the 5G subscriber 2 starts up, the AMF determines that the 5G subscriber 2 is a subscriber in region B according to the subscriber number, and the SMSF2 and the SMSF3 provide services in region B. A ratio of the capacity of SMSF2 to the capacity of SMSF3 is equal to 2:1. The AMF chooses to register the subscriber 2 to the SMSF2 in region B through the Nsmsf_SMService_Activate_message.

In S870, when a 5G subscriber 3 starts up, the AMF determines that the 5G subscriber 3 is a subscriber in region B according to the subscriber number and chooses to register the subscriber 3 on the SMSF2 in region B.

In an embodiment, when the 5G subscriber 3 starts up, the AMF determines that the 5G subscriber 3 is a subscriber in region B according to the subscriber number, and the SMSF2 and the SMSF3 provide services in region B with a capacity of 2:1. The AMF chooses to register the subscriber 3 to the SMSF2 in region B through the Nsmsf_SMService_Activate message.

In S880, when a 5G subscriber 4 starts up, the AMF determines that the 5G subscriber 4 is a subscriber in region B according to the subscriber number and chooses to register the subscriber 4 on the SMSF3 in region B.

In an embodiment, when the 5G subscriber 4 starts up, the AMF determines that the 5G subscriber 4 is a subscriber in region B according to the subscriber number, and the SMSF2 and the SMSF3 provide services in region B with a capacity of 2:1. The AMF chooses to register the subscriber 4 to the SMSF3 in region B through the Nsmsf_SMService_Activate message.

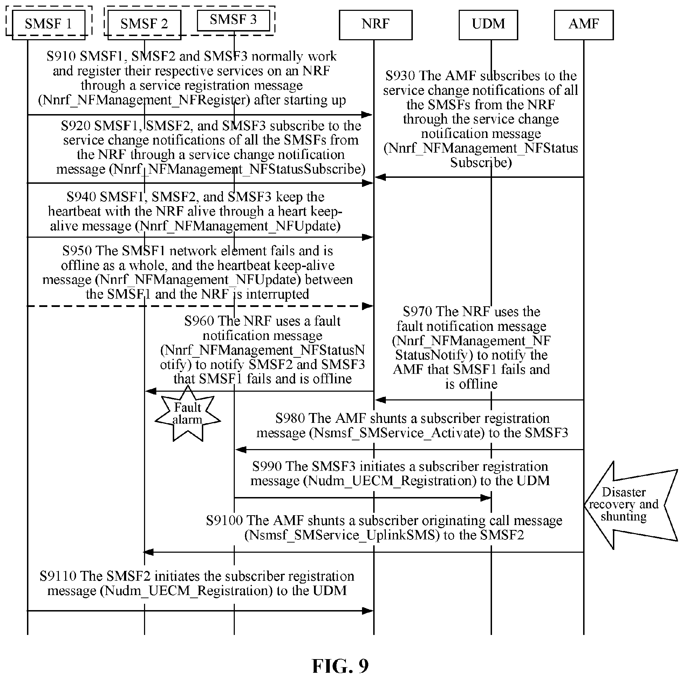

In an embodiment, FIG. 9 is a flowchart of SMSF network element fault tolerance according to an embodiment of the present application. As shown in FIG. 9, this embodiment includes S910 to S9110.

In S910, SMSF1, SMSF2 and SMSF3 normally work and register their respective services on an NRF through an Nnrf_NFManagement_NFRegister message after starting up.

In S920, SMSF1, SMSF2, and SMSF3 subscribe to the service change notifications of all the SMSFs from the NRF through the Nnrf_NFManagement_NFStatusSubscribe message.

In S930, an AMF subscribes to the service change notifications of all the SMSFs from the NRF through the Nnrf_NFManagement_NFStatusSubscribe message.

In S940, SMSF1, SMSF2, and SMSF3 keep the heartbeat with the NRF alive through the Nnrf_NFManagement_NFUpdate message.

In S950, the SMSF1 network element fails and is offline as a whole, and the heartbeat keep-alive message Nnrf_NFManagement_NFUpdate between the SMSF1 and the NRF is interrupted.

In S960, the NRF uses the Nnrf_NFManagement_NFStatusNotify message to notify SMSF2 and SMSF3 that SMSF1 fails and is offline.

In an embodiment, SMSF2 and SMSF3 network elements send an alarm to notify the operation and maintenance personnel.

In S970, the NRF uses the Nnrf_NFManagement_NFStatusNotify message to notify the AMF that SMSF1 fails and is offline.

In an embodiment, only SMSF2 and SMSF3 provide NAS short message services.

In S980, the AMF shunts the Nsmsf_SMService_Activate message of the subscriber to the SMSF3. In an embodiment, the 5G subscriber 1 starts up. The subscriber should have registered on the SMSF1 network element that goes down according to the region, and the AMF knows that the SMSF1goes down and cannot deliver messages. The AMF comprehensively determines localities and capacities of the SMSF2 and the SMSF3 and shunts the Nsmsf_SMService_Activate message of the subscriber 1 to the SMSF3.

In S990, the SMSF3 initiates the Nudm_UECM_Registration registration message to the UDM. In an embodiment, the SMSF2 initiates the Nudm_UECM_Registration registration message, including subscriber 1 and SMSF2, to the UDM to notify the UDM to record that the subscriber 1 has currently been taken over on the SMSF2.

In an embodiment, the 5G subscriber 2 that is originally registered on the SMSF1 network element that goes down sends a short message, the AMF knows that the SMSF1 goes down and cannot deliver messages, and the AMF comprehensively determines localities and capabilities of the SMSF2 and the SMSF3 and shunts the Nsmsf_SMService_UplinkSMS originating call message of the subscriber to the SMSF2.

In S9100, the AMF shunts the Nsmsf_SMService_UplinkSMS originating call message of the subscriber 2 to the SMSF2.

In S9110, the SMSF2 initiates the Nudm_UECM_Registration registration message to the UDM. In an embodiment, the SMSF3 initiates the Nudm_UECM_Registration registration message, including subscriber 2 and SMSF2, to the UDM to notify the UDM to record that the subscriber l has currently been taken over on the SMSF3. Then the processing continues according to the flow shown in FIG. 3.

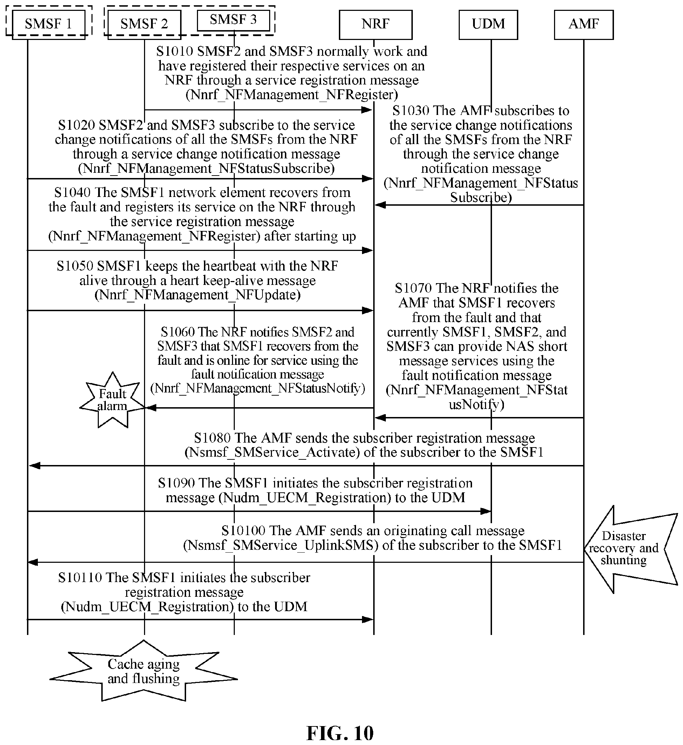

In an embodiment, FIG. 10 is a flowchart of an MSF network element disaster recovery according to an embodiment of the present application. As shown in FIG. 10, this embodiment includes S1010 to S10110.

In S1010, SMSF2 and SMSF3 normally work and have registered their respective services on an NRF through an Nnrf_NFManagement_NFRegister message.

In S1020, SMSF2 and SMSF3 subscribe to the service change notifications of all the SMSFs from the NRF through the Nnrf_NFManagement_NFStatusSubscribe message.

In S1030, an AMF subscribes to the service change notifications of all the SMSFs from the NRF through the Nnrf_ NFManagement_NFStatusSubscribe message.

In S1040, the SMSF1 network element recovers from the fault and registers its service on the NRF through the Nnrf_NFManagement_NFRegister message after starting up.

In S1050, SMSF1 keeps the heartbeat with the NRF alive through the Nnrf_NFManagement_NFUpdate message.

In S1060, the NRF notifies SMSF2 and SMSF3 that SMSF1 recovers from the fault and is online for service using the Nnrf_NFManagement_NFStatusNotify message.

In an embodiment, SMSF2 and SMSF3 network elements send alarm recovery to notify the operation and maintenance personnel.

In S1070, the NRF notifies the AMF that SMSF 1 recovers from the fault and that currently SMSF1, SMSF2, and SMSF3 can provide NAS short message services using the Nnrf_NFManagement_NFStatusNotify message.

In S1080, the AMF sends the Nsmsf_SMService_Activate message of the subscriber to the SMSF1. In an embodiment, one 5G subscriber 1 starts up, the AMF knows that the SMSF1 network element in a region the nearest to the calling subscriber has recovered to provide services, and the AMF sends the Nsmsf_SMService_Activate message of the subscriber to the SMSF1.

In S 1090, the SMSF1 initiates the Nudm_UECM_Registration registration message to the UDM. In an embodiment, the SMSF1 initiates the Nudm_UECM_Registration registration message (subscriber 1 and SMSF1) to the UDM to notify the UDM to record that the subscriber l has currently been taken over on the SMSF1.

In an embodiment, when the SMSF1 fails, the 5G subscriber 2 that is originally registered on the disaster backup SMSF2 or SMSF3 network element sends a short message, the AMF knows that the SMSF1 has recovered to provide the service, and the AMF sends the Nsmsf_SMService_UplinkSMS originating call message of the subscriber to the SMSF1.

In S10100, the AMF sends the Nsmsf_SMService_UplinkSMS originating call message of the subscriber to the SMSF1.

In S10110, the SMSF1 initiates the Nudm_UECM_Registration registration message (subscriber 2 and SMSF1) to the UDM to notify the UDM to record that the subscriber 2 has currently been taken over on the SMSF1. Then the processing continues according to the flow shown in FIG. 2. In an embodiment, since the validity period of the subscriber context cache is set, the disaster backup SMSF2 and SMSF3 network elements do not receive the registration message and originating call message of the subscriber whose locality belongs to the SMSF1 from the AMF. After the cache validity period expires, the subscriber context information is automatically deleted from the cache of the disaster backup SMSF2 and SMSF3 network elements, thereby avoiding the cache dirty data.

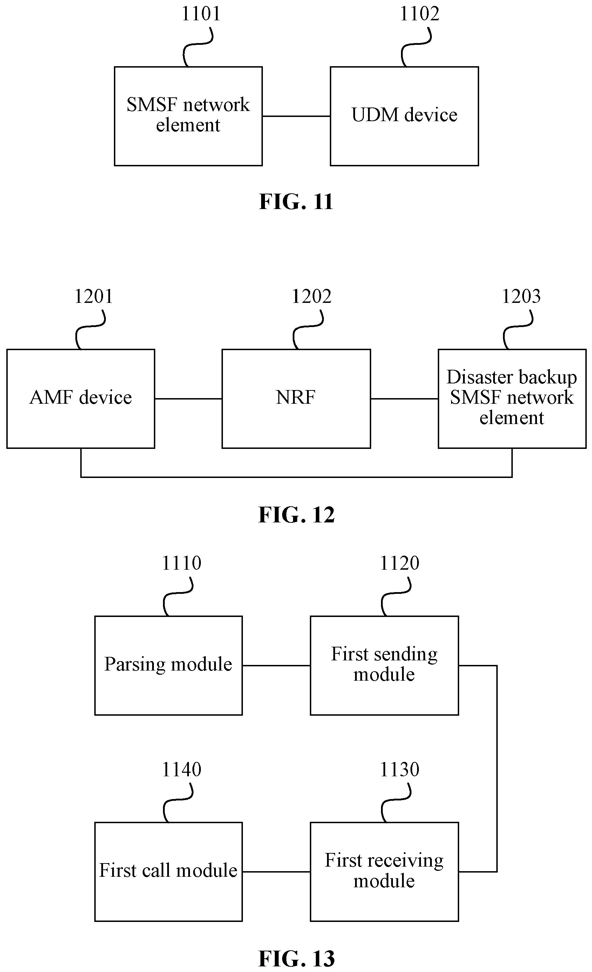

FIG. 11 is a structural block diagram of a communication connection system according to an embodiment of the present application. As shown in FIG. 11, the communication connection system of this embodiment includes an SMSF network element 1101 and a UDM device 1102.

In an embodiment, the SMSF network element 1101 is configured to: in a case where subscriber context information corresponding to an SUPI is not found in a preset cache of the SMSF network element 1101, send an information acquisition request to a UDM device 1102.

The UDM device 1102 is configured to feed back the subscriber context information to the SMSF network element 1101 according to the information acquisition request.

The SMSF network element 1101 is configured to continue a call flow according to the subscriber context information.

FIG. 12 is a structural block diagram of another communication connection system according to an embodiment of the present application. As shown in FIG. 12, the communication connection system of this embodiment includes an AMF device 1201, an NRF 1202 and a disaster backup SMSF network element 1203.

The AMF device 1201 is configured to: in a case where an SMSF network element where a call subscriber is located fails and goes down, receive an SMSF network element service change information notification sent by the NRF.

The AMF device 1201 is configured to determine the disaster backup SMSF network element 1203 according to the SMSF network element service change information notification.

The disaster backup SMSF network element 1203 is configured to: in a case where the SMSF network element where the call subscriber is located fails and goes down, receive the SMSF network element service change information notification sent by the NRF 1202.

The AMF device 1201 is configured to: in a case where a call request of the call subscriber is detected, shunt a subscriber call message of the call subscriber according to a locality and a capacity of the disaster backup SMSF network element 1203.

The disaster backup SMSF network element 1203 is configured to: in a case where the subscriber call message is detected, acquire subscriber context information of the call subscriber from a preset cache or a UDM device, and continue a call flow, where service corresponding to the subscriber call message is originally processed by the SMSF network element that fails and goes down.

In an embodiment, the communication system further includes a recovered SMSF network element. The recovered SMSF network element is configured to re-register an SMSF network element service on the NRF 1202; receive the SMSF network element service change information notification fed back by the NRF 1202; in a case where the subscriber call message is detected, receive a new registration message and the subscriber call message which are sent by the AMF device 1201; and perform the call flow according to the subscriber context information corresponding to the subscriber call message.

FIG. 13 is a structural block diagram of a communication connection apparatus according to an embodiment of the present application. This embodiment is applied to the case of the abnormality protection of an SMSF network element. As shown in FIG. 13, the apparatus in this embodiment includes a parsing module 1110, a first sending module 1120, a first receiving module 1130, and a first call module 1140.

The parsing module 1110 is configured to parse and obtain an SUPI of a call subscriber according to a subscriber call message.

The first sending module 1120 is configured to: in a case where subscriber context information corresponding to the SUPI is not found in a preset cache, send an information acquisition request to a UDM device with the SUPI carried.

The first receiving module 1130 is configured to receive the subscriber context information fed back by the UDM device, where the subscriber context information includes: information about the call subscriber, information about an AMF device where the call subscriber is located, and information about subscription data.

The first call module 1140 is configured to continue a call flow according to the fed back subscriber context information.

The communication connection apparatus provided in this embodiment is configured to implement the communication connection method of the embodiment shown in FIG. 1. The implementation principle and effects of the communication connection apparatus provided in this embodiment are similar to those of the communication connection method, and details will not be repeated here.

In an embodiment, in the case where the subscriber call message is a calling subscriber originating call message, the call subscriber is a calling subscriber.

In an embodiment, in the case where the subscriber call message is a called subscriber terminating call message, the call subscriber is a called subscriber.

In an embodiment, in the case where a call subscriber sets MO or MT abnormality protection, a cache validity period is set for the subscriber context information.

In an embodiment, in the case where the call subscriber registers, sends an originating call message or receives a terminating call message, the cache validity period is automatically extended.

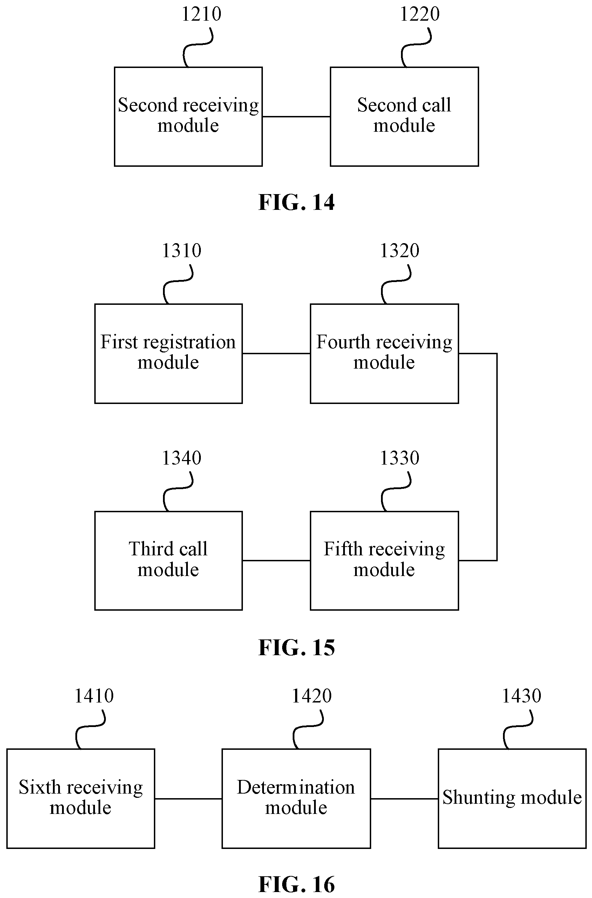

FIG. 14 is a structural block diagram of another communication connection apparatus according to an embodiment of the present application. This embodiment is applied to the case where the SMSF network element fails and goes down. As shown in FIG. 14, the apparatus of this embodiment includes a second receiving module 1210 and a second call module 1220.

The second receiving module 1210 is configured to: in a case where an SMSF network element where a call subscriber is located fails and goes down, receive an SMSF network element service change information notification sent by an NRF.

The second call module 1220 is configured to: in a case where a subscriber call message is detected, acquire subscriber context information of the call subscriber from a preset cache or a UDM device, and continue a call flow.

The communication connection apparatus provided in this embodiment is configured to implement the communication connection method of the embodiment shown in FIG. 2. The implementation principle and effects of the communication connection apparatus provided in this embodiment are similar to those of the communication connection method, and details will not be repeated here. In an embodiment, the communication connection apparatus further includes an initiation module which is configured to: after the SMSF network element service change information notification sent by the NRF is received and before the subscriber call message is detected, initiate SMSF network element alarm information according to the SMSF network element service change information notification.

In an embodiment, in a case where the call subscriber registers, sends an originating call message or receives a terminating call message, the communication connection apparatus further includes a period extending module which is configured to automatically extend a cache validity period of the subscriber context information corresponding to the call subscriber.

In an embodiment, in a case where the subscriber context information corresponding to the call subscriber is not found in the preset cache, the communication connection apparatus further includes a second sending module and a third receiving module.

The second sending module is configured to send an information acquisition request to a UDM device.

The third receiving module is configured to receive the subscriber context information fed back by the UDM device.

FIG. 15 is a structural block diagram of another communication connection apparatus according to an embodiment of the present application. This embodiment is applied to the case where an SMSF network element that fails and goes down recovers. As shown in FIG. 15, the apparatus in this embodiment includes a first registration module 1310, a fourth receiving module 1320, a fifth receiving module 1330, and a third call module 1340.

The first registration module 1310 is configured to: in the case where an SMSF network element having a fault and downtime recovers, re-register an SMSF network element service on an NRF. The fourth receiving module 1320 is configured to receive an SMSF network element service change information notification sent by an NRF.

The fifth receiving module 1330 is configured to: in a case where a subscriber call message is detected, receive a new registration message and the subscriber call message which are sent by an AMF device.

The third call module 1340 is configured to perform a corresponding call flow according to subscriber context information corresponding to the subscriber call message.

The communication connection apparatus provided in this embodiment is configured to implement the communication connection method of the embodiment shown in FIG. 3. The implementation principle and effects of the communication connection apparatus provided in this embodiment are similar to those of the communication connection method, and details will not be repeated here.

In an embodiment, subscriber context information corresponding to the subscriber call message is acquired from a preset cache or a UDM device.

FIG. 16 is a structural block diagram of another communication connection apparatus according to an embodiment of the present application. This embodiment is applied to the case where the SMSF network element fails and goes down. As shown in FIG. 16, the apparatus of this embodiment includes a sixth receiving module 1410, a first determination module 1420 and a shunting module 1430.

The sixth receiving module 1410 is configured to: in a case where an SMSF network element where a call subscriber is located fails and goes down, receive an SMSF network element service change information notification sent by an NRF.

The first determination module 1420 is configured to determine a disaster backup SMSF network element according to the SMSF network element service change information notification, where the disaster backup SMSF network element is another SMSF network element other than the SMSF network element that fails and goes down.

The shunting module 1430 is configured to: in a case where a subscriber request of the call subscriber is detected, shunt a subscriber call message of the call subscriber according to a locality and a capacity of the disaster backup SMSF network element.

The communication connection apparatus provided in this embodiment is configured to implement the communication connection method of the embodiment shown in FIG. 4. The implementation principle and effects of the communication connection apparatus provided in this embodiment are similar to those of the communication connection method, and details will not be repeated here.

**In** an embodiment, after the subscriber call message of the call subscriber is shunted according to the locality and capacity of the disaster backup SMSF network element, in a case where the subscriber call message is detected, subscriber context information of the call subscriber is acquired from a preset cache or UDM, and a corresponding call flow continues.

**In** an embodiment, in the case where a call subscriber originates a call, the communication connection apparatus further includes an acquisition module, a second determination module and a second registration module.

The acquisition module is configured to acquire a locality and a capacity of each SMSF network element.

The second determination module is configured to determine a to-be-connected SMSF network element according to the locality and the capacity.

The second registration module is configured to distribute and register the call subscriber to the determined SMSF network element.

In a case where the SMSF network element that fails and goes down recovers, the communication connection apparatus further includes a third sending module which is configured to send a new registration message and the subscriber call message of the call subscriber to the recovered SMSF network element.

In an embodiment, in a case where the call subscriber is located at the SMSF network element that fails and goes down, inside the SMSF network element, subscriber context information is cached in a cluster and anti-affinity copy manner in the SMSF network element.

In an embodiment, the subscriber context information is cached in an inter-cluster synchronization manner.

In an embodiment, in a case where the SMSF network element that fails and goes down recovers, the communication connection apparatus further includes a registration module which is configured to re-register the SMSF network element service on the NRF and a third receiving module which is configured to receive the SMSF network element service change information notification sent by the NRF.

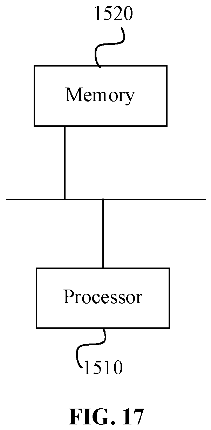

FIG. 17 is a structural schematic diagram of a device according to an embodiment of the present application. As shown in FIG. 17, the device provided in the present application includes a processor 1510 and a memory 1520. The number of processors 510 in the device may be one or more, with one processor 1510 as an example in FIG. 17. The number of memories 1520 in the device may be one or more, with one memory 1520 as an example in FIG. 17. The processor 1510 and the memory 1520 of the device are connected via a bus or in other manners, with the connection via a bus as an example in FIG. 17. In this embodiment, the device is an SMSF network element.

The memory 1520, as a computer-readable storage medium, may be configured to store software programs and computer-executable programs and modules, such as program instructions/modules (for example, a parsing module, a first sending module, a first receiving module, and a first call module in the communication connection apparatus) corresponding to the device of any embodiment of the present application. The memory 1520 may include a program storage region and a data storage region, where the program storage region may store an operating system and an application program required by at least one function while the data storage region may store data created depending on use of the device. Furthermore, the memory 1520 may include a high-speed random-access memory, and may also include a non-volatile memory such as at least one disk memory, flash memory or other non-volatile solid-state memories. In some examples, the memory 1520 may include memories which are remotely disposed relative to the processor 1510, and these remote memories may be connected to the device via a network. Examples of the preceding network include the Internet, an intranet, a local area network, a mobile communication network, and a combination thereof.

The device provided above may be configured to execute the communication connection method provided by any embodiment described above, and has corresponding functions and effects.

An embodiment of the present application further provides a storage medium including computer-executable instructions. The computer-executable instructions, when executed by a computer processor, are used for performing a communication connection method executed by an SMSF network element. The method includes: parsing and obtaining an SUPI of a call subscriber according to a subscriber call message; in a case where subscriber context information corresponding to the SUPI is not found in a preset cache, sending an information acquisition request to a UDM device with the SUPI carried; receiving the subscriber context information fed back by the UDM device, where the subscriber context information includes: information about the call subscriber, information about an AMF device where the call subscriber is located, and information about subscription data; and continuing a corresponding call flow according to the fed back subscriber context information.

An embodiment of the present application further provides a storage medium including computer-executable instructions. The computer-executable instructions, when executed by a computer processor, are used for performing a communication connection method executed by a disaster backup SMSF network element. The method includes: in a case where an SMSF network element where a call subscriber is located fails and goes down, receiving an SMSF network element service change information notification sent by an NRF; initiating SMSF network element alarm information according to the SMSF network element service change information notification; and in a case where the subscriber call message is detected, acquiring subscriber context information of the call subscriber from a preset cache, and continuing a corresponding call flow.

An embodiment of the present application further provides a storage medium including computer-executable instructions. The computer-executable instructions, when executed by a computer processor, are used for performing a communication connection method executed by an SMSF network element that fails, goes down and then recovers. The method includes: in a case where an SMSF network element that fails and goes down recovers, re-registering an SMSF network element service with an NRF; receiving an SMSF network element service change information notification fed back by the NRF; in a case where a subscriber call message is detected, receiving a new registration message and the subscriber call message which are sent by an AMF device; and performing a corresponding call flow according to subscriber context information corresponding to the subscriber call message.

An embodiment of the present application further provides a storage medium including computer-executable instructions. The computer-executable instructions, when executed by a computer processor, are used for performing a communication connection method executed by an AMF device. The method includes: in a case where an SMSF network element where a call subscriber is located fails and goes down, receiving an SMSF network element service change information notification sent by an NRF; determining a corresponding disaster backup SMSF network element according to the SMSF network element service change information notification, where the disaster backup SMSF network element is another SMSF network element other than the SMSF network element where the call subscriber is located; and in a case where a subscriber request of the call subscriber is detected, shunting a subscriber call message of the call subscriber according to a locality and a capacity of the disaster backup SMSF network element.

The term user equipment encompasses any suitable type of wireless user equipment, such as a mobile phone, a portable data processing apparatus, a portable web browser or an onboard mobile station.

Various embodiments of the present application may be implemented in hardware or special-purpose circuits, software, logic or any combination thereof. For example, some aspects may be implemented in hardware while other aspects may be implemented in firmware or software that may be executed by a controller, a microprocessor, or other computing apparatuses, though the present application is not limited thereto.

The embodiments of the present application may be implemented by computer program instructions executed by a data processor of a mobile apparatus, for example, in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps with logic circuits, modules, and functions. Computer programs may be stored in a memory. The memory may be of any type suitable to the local technical environment and may be implemented using any suitable data storage technology such as, but not limited to, a read-only memory (ROM), a random-access memory (RAM), an optical memory device and system (a digital video disc (DVD) or a compact disc (CD)), and the like. Computer-readable media may include non-transitory storage media. The data processor may be of any type suitable to the local technical environment, such as a general-purpose computer, a special-purpose computer, a microprocessor, a digital signal processing (DSP), an application-specific integrated circuit (ASIC), a field-programmable gate array (FPGA), and a processor based on a multi-core processor architecture.

## Claims

1. A short message handling method, comprising:
parsing (S110), by a short message service function, SMSF, network element, a message for forwarding a short message to obtain a subscription permanent identifier of a subscriber, wherein the short message is to be sent from or to be received by the subscriber;
in a case where subscriber context information corresponding to the subscription permanent identifier is not found in a preset cache, sending (S120), by the SMSF network element, an information acquisition request to a unified data management, UDM, device with the subscription permanent identifier carried;
receiving (S130), by the SMSF network element, the subscriber context information fed back by the UDM device, wherein the subscriber context information comprises: information about the subscriber, information about an access and mobility management function, AMF, device where the subscriber is located, and information about subscription data; and
continuing (S140), by the SMSF network element, a transmission flow of the short message according to the fed back subscriber context information.

2. The method of claim 1, wherein in a case where the short message is a subscriber originating message to be sent, the subscriber is an originating subscriber.

3. The method of claim 1, wherein in a case where the short message is a subscriber terminating message to be received, the subscriber is a terminating subscriber.

4. The method of claim 1, further comprising: setting a cache validity period for the subscriber context information.

5. The method of claim 4, further comprising: in a case where the subscriber registers, sends an originating message, or receives a terminating message, automatically extending the cache validity period.

6. The method of claim 1, wherein the message for forwarding the short message comprises an Nsmsf_SMService_UplinkSMS
message from an AMF device, wherein the short message is sent from the subscriber.

7. The method of claim 1, wherein the message for forwarding the short message comprises an MT_forward message from a short message service center, wherein the short message is to be received by the subscriber.

8. A communication system, comprising: a short message service function, SMSF, network element (1101) and a unified data management, UDM, device (1102);
wherein the SMSF network element (1101) is configured to: parse a message for forwarding a short message to obtain a subscription permanent identifier of a subscriber, and in a case where subscriber context information corresponding to the subscription permanent identifier is not found in a preset cache, send an information acquisition request to the UDM device (1102) with the subscription permanent identifier carried, wherein the short message to be sent from or to be received by the subscriber;
the UDM device (1102) is configured to feed back the subscriber context information to the SMSF network element (1101) according to the information acquisition request; and
the SMSF network element (1101) is further configured to continue a transmission flow of the short message according to the subscriber context information.

9. A storage medium storing a computer program, wherein the computer program, when executed by a processor, performs the method of any one of claims 1 to 7.

## Patentansprüche

1. Kurznachrichtbehandlungsverfahren, umfassend:
Parsen (S110), durch ein Netzwerkelement einer Kurznachrichtendienstfunktion, SMSF, einer Nachricht zum Weiterleiten einer Kurznachricht, um eine permanente Teilnahmeberechtigungskennung eines Teilnehmers zu erhalten, wobei die Kurznachricht von dem Teilnehmer gesendet oder durch diesen empfangen werden soll;
in einem Fall, in dem Teilnehmerkontextinformationen, die der permanenten Teilnahmeberechtigungskennung entsprechen, nicht in einem voreingestellten Cache gefunden werden, Senden (S120), durch das SMSF-Netzwerkelement, einer Informationsbeschaffungsanfrage an eine Vorrichtung einer einheitlichen Datenverwaltung, UDM, mit der übertragenen permanenten Teilnahmeberechtigungskennung;
Empfangen (S130), durch das SMSF-Netzwerkelement, der durch die UDM-Vorrichtung zurückgemeldeten Teilnehmerkontextinformationen, wobei die Teilnehmerkontextinformationen umfassen: Informationen über den Teilnehmer, Informationen über eine Zugriffs- und Mobilitätsverwaltungsfunktionsvorrichtung, AMF-Vorrichtung, auf der sich der Teilnehmer befindet, und Informationen über Teilnahmeberechtigungsdaten; und
Fortsetzen (S140), durch das SMSF-Netzwerkelement, eines Übermittlungsflusses der Kurznachricht gemäß der zurückgemeldeten Teilnehmerkontextinformationen.

2. Verfahren nach Anspruch 1, wobei in einem Fall, in dem die Kurznachricht eine Ursprungsteilnehmernachricht ist, die gesendet werden soll, der Teilnehmer ein Ursprungsteilnehmer ist.

3. Verfahren nach Anspruch 1, wobei in einem Fall, in dem die Kurznachricht eine Abschlussteilnehmernachricht ist, die empfangen werden soll, der Teilnehmer ein Abschlussteilnehmer ist.

4. Verfahren nach Anspruch 1, ferner umfassend: Festlegen einer Cache-Gültigkeitsdauer für die Teilnehmerkontextinformationen.

5. Verfahren nach Anspruch 4, ferner umfassend: in einem Fall, in dem sich der Teilnehmer registriert, eine Ursprungsnachricht sendet oder eine Abschlussnachricht empfängt, automatisches Verlängern der Cache-Gültigkeitsdauer.

6. Verfahren nach Anspruch 1, wobei die Nachricht zum Weiterleiten der Kurznachricht eine Nsmsf_SMService_UplinkSMS-Nachricht von einer AMF-Vorrichtung umfasst, wobei die Kurznachricht von dem Teilnehmer gesendet wird.

7. Verfahren nach Anspruch 1, wobei die Nachricht zum Weiterleiten der Kurznachricht eine MT_forward-Nachricht von einem Kurznachrichtendienstzentrum umfasst, wobei die Kurznachricht durch den Teilnehmer empfangen werden soll.

8. Kommunikationssystem, umfassend: ein Netzwerkelement (1101) einer Kurznachrichtendienstfunktion, SMSF, und eine Vorrichtung (1102) der einheitlichen Datenverwaltung, UDM;
wobei das SMSF-Netzwerkelement (1101) konfiguriert ist zum: Parsen einer Nachricht zum Weiterleiten einer Kurznachricht, um eine permanente Teilnahmeberechtigungskennung eines Teilnehmers zu erhalten, und in einem Fall, in dem Teilnehmerkontextinformationen, die der permanenten Teilnahmeberechtigungskennung entsprechen, nicht in einem voreingestellten Cache gefunden werden, Senden einer Informationsbeschaffungsanfrage an die UDM-Vorrichtung (1102) mit der übertragenen permanenten Teilnahmeberechtigungskennung, wobei die Kurznachricht von dem Teilnehmer gesendet oder durch diesen empfangen werden soll;
die UDM-Vorrichtung (1102) konfiguriert ist, um die Teilnehmerkontextinformationen an das SMSF-Netzwerkelement (1101) entsprechend der Informationsbeschaffungsanfrage zurückzumelden; und
das SMSF-Netzwerkelement (1101) ferner konfiguriert ist, um einen Übermittlungsfluss der Kurznachricht gemäß den Teilnehmerkontextinformationen fortzusetzen.

9. Speichermedium, das ein Computerprogramm speichert, wobei das Computerprogramm, wenn es durch einen Prozessor ausgeführt wird, das Verfahren nach einem der Ansprüche 1 bis 7 durchführt.

## Revendications

1. Procédé de traitement de messages courts, comprenant :
l'analyse (S110), par un élément de réseau à fonction de service de messages courts, SMSF, d'un message pour acheminer un message court afin d'obtenir un identifiant permanent d'abonnement d'un abonné, dans lequel le message court doit à être envoyé ou reçu par l'abonné ;
dans le cas où des informations de contexte d'abonné correspondant à l'identifiant permanent d'abonnement ne sont pas trouvées dans un cache prédéfini, l'envoi (S120), par l'élément de réseau SMSF, d'une demande d'acquisition d'informations à un dispositif de gestion unifiée des données, UDM, portant l'identifiant permanent d'abonnement ;
la réception (S130), par l'élément de réseau SMSF, des informations de contexte d'abonné renvoyées par le dispositif UDM, dans lequel les informations de contexte d'abonné comprennent : des informations sur l'abonné, des informations sur un dispositif à fonction de gestion d'accès et de mobilité, AMF, où se trouve l'abonné, et des informations sur des données d'abonnement ; et
la poursuite (S140), par l'élément de réseau SMSF, d'un flux de transmission du message court en fonction des informations de contexte d'abonné renvoyées.

2. Procédé selon la revendication 1, dans lequel, dans le cas où le message court est un message en provenance de l'abonné à envoyer, l'abonné est un abonné émetteur.

3. Procédé selon la revendication 1, dans lequel, dans le cas où le message court est un message à destination de l'abonné à recevoir, l'abonné est un abonné destinataire.

4. Procédé selon la revendication 1, comprenant en outre : la définition d'une période de validité de cache pour les informations de contexte d'abonné.

5. Procédé selon la revendication 4, comprenant en outre : dans le cas où l'abonné s'enregistre, envoie un message sortant ou reçoit un message entrant, la prolongation automatique de la période de validité de cache.

6. Procédé selon la revendication 1, dans lequel le message pour acheminer le message court comprend un message Nsmsf_SMService_UplinkSMS provenant d'un dispositif AMF, dans lequel le message court est envoyé par l'abonné.

7. Procédé selon la revendication 1, dans lequel le message pour acheminer le message court comprend un message MT_forward provenant d'un centre de service de messages courts, dans lequel le message court doit être reçu par l'abonné.

8. Système de communication, comprenant : un élément de réseau à fonction de service de messages courts, SMSF, (1101) et un dispositif de gestion unifiée des données, UDM, (1102) ;
dans lequel l'élément de réseau SMSF (1101) est configuré pour : analyser un message pour acheminer un message court afin d'obtenir un identifiant permanent d'abonnement d'un abonné, et dans le cas où des informations de contexte d'abonné correspondant à l'identifiant permanent d'abonnement ne sont pas trouvées dans un cache prédéfini, envoyer une demande d'acquisition d'informations au dispositif UDM (1102) portant l'identifiant permanent d'abonnement, dans lequel le message court doit être envoyé ou reçu par l'abonné ;
le dispositif UDM (1102) est configuré pour renvoyer les informations de contexte d'abonné à l'élément de réseau SMSF (1101) en fonction de la demande d'acquisition d'informations ; et
l'élément de réseau SMSF (1101) est en outre configuré pour poursuivre un flux de transmission du message court en fonction des informations de contexte d'abonné.

9. Support de stockage stockant un programme informatique, dans lequel le programme informatique, lorsqu'il est exécuté par un processeur, effectue le procédé selon l'une quelconque des revendications 1 à 7.
